# FASCICULE DE BREVET EUROPEEN

(11) **EP 0 700 711 B1**
(45) Date de publication et mention de la délivrance du brevet: **12.01.2000**
(21) Numéro de dépôt: 95401916.2
(22) Date de dépôt: 18.08.1995
(51) Int. Cl.: B01D 53/22

(54) **Procédé et installation de séparation de gaz par voie membranaire**
Verfahren und Vorrichtung zur Gastrennung mit Membranen
Process and device for gas separation using membranes

(30) Priorité: 12.09.1994 FR 9410851
(43) Date de publication de la demande: 13.03.1996
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Fillet, Frédéric, F-92140 Clamart (FR); Barry, Lionel, F-78100 Versailles (FR)
(74) Mandataire: Le Moenner, Gabriel

(56) Documents cités:
- EP-A- 0 521 784
- EP-A- 0 586 018
- US-A- 5 306 331

## Description

L'invention concerne la production ou séparation de gaz par voie membranaire.

La production de gaz (notamment l'azote) par des membranes s'est considérablement développée ces dernières années, partout dans le monde, en complément de la production traditionnelle par voie cryogenique, car elle présente les avantages suivants :
- Une excellente sécurité d'approvisionnement;
- De faibles coûts de production;
- La possibilité de fournir, à des coûts très attractifs, selon les applications considérées, des gaz de pureté adaptée.

Le principe est que, sous l'effet d'une différence de pression partielle de part et d'autre de la membrane, on obtient, côté perméat, un mélange à basse pression, enrichi en composants les plus perméables et en sortie de membrane (aussi appelée côté "résidu" ou coté "rejet"), un mélange à une pression proche de la pression d'alimentation (du mélange entrant) et qui est enrichi en composants les moins perméables.

On utilise ainsi pour produire de l'azote (souvent qualifié de "impur") à partir d'air, des membranes semi-perméables présentant des propriétés de séparation de l'oxygène par rapport à l'azote (sélectivité), par exemple du type polyimide, le mélange enrichi en oxygène étant obtenu côté perméat. Ces membranes sont souvent qualifiées de membranes "azote".

Pour ce qui est de la production d'hydrogène ou de CO, on procède le plus souvent à une récupération à partir de mélanges issus de certaines industries, que l'on sépare sur des membranes semi-perméables présentant des propriétés de séparation de l'hydrogène par rapport aux autres composants du mélange, par exemple du type polyaramide, le mélange enrichi en hydrogène étant obtenu côté perméat, le mélange enrichi selon les cas en hydrocarbures ou en CO étant obtenu du coté résiduaire de la membrane. Ces membranes sont souvent qualifiées de membranes "hydrogène".

Il apparaît que les performances obtenues dépendront très largement des conditions d'utilisation de la membrane, telles que la température, la pression d'alimentation de la membrane, ou encore la teneur du mélange d'alimentation en le composant que l'on souhaite extraire côté perméat.

On sait ainsi pour ce qui est de la température, qu'en augmentant la température de fonctionnement de la membrane, le plus souvent, la perméabilité et donc la productivité de la membrane augmentent, mais sa sélectivité (par exemple O₂/N₂) et donc le rendement se dégradent. On entend le plus souvent par l'expression "température de fonctionnement de la membrane ou du module membranaire" la température obtenue à l'intérieur de la membrane ou du module du fait de la température du gaz entrant qui y transite, avec parfois l'intervention supplémentaire d'un système extérieur de chauffe du module membranaire ou de maintien en température (enceinte thermostatée).

Ainsi, selon les cas, pour obtenir le niveau de performances requises, on chauffera le gaz entrant à plusieurs dizaines de degré, ou bien on maintiendra ce gaz à la température ambiante, ou encore dans certains cas on refroidira ce gaz en dessous de la température ambiante, voire en dessous de 0°C.

On rappellera ici, pour le cas de la production d'azote à partir d'air que le "rendement" de la membrane représente la proportion d'azote présente dans le mélange entrant que l'on retrouve à la sortie (résiduaire) de la membrane, la sélectivité O₂/N₂ de la membrane représente quant à elle le rapport des perméances (on utilise aussi souvent le terme perméabilités) de l'oxygène et de l'azote au travers de la membrane (sel. = Perm (O₂) / Perm (N₂)). Le même type de raisonnement s'applique pour des membranes "hydrogène", sachant qu'ici, le raisonnement doit être inversé en terme de rendement d'extraction puisque l'on cherche à récupérer le mélange perméat enrichi en hydrogène.

Un refroidissement du mélange gazeux entrant, avant sa séparation dans un module membranaire, est donc parfois envisagé dans le cas d'une séparation sur un monoétage membranaire mais a également été évoqué entre deux étages de séparation dans le cas d'installations multiétagées, pour produire des gaz (par exemple de l'azote) de haute pureté (on se reportera aux travaux effectués par la Demanderesse tels que notamment rapportés dans le document EP-A-521 784).

Une telle opération de refroidissement est classiquement effectuée à l'aide de moyens tels que froid mécanique, échangeur sur liquide cryogénique, ou encore opération de détente sur une turbine.

Le document US-A-5,306,331 a par ailleurs proposé une solution plus complexe, mettant en oeuvre, afin de refroidir le mélange entrant à séparer dans un séparateur membranaire, un double échange thermique liquide/gaz:
- l'utilisation du perméat à bas point de rosée produit par le séparateur pour refroidir par évaporation la réserve d'eau d'une première colonne;
- l'utilisation de cette eau ainsi refroidie pour refroidir, dans une seconde colonne, le mélange gazeux entrant avant son arrivée dans le séparateur.

Cette solution, si elle représente une démarche intéressante vis à vis des méthodes de refroidissement classiquement disponibles, présente néanmoins des inconvénients indiscutables, liés à sa complexité : l'utilisation de deux tours de refroidissement à garnissage, une circulation d'eau (incluant l'appoint d'eau à réaliser en continu) conséquente, l'énergie élevée nécessaire pour faire circuler cette eau (pompes), sans oublier le risque lors du premier échange thermique de solubiliser de l'oxygène provenant du perméat dans l'eau, cette même eau étant utilisée dans la seconde étape d'échange, d'où le risque de suroxygénation du mélange entrant.

La Demanderesse a mis en évidence une méthode particulièrement avantageuse (par sa simplicité et son caractère économique) pour effectuer cette opération de refroidissement avant une étape de séparation membranaire qui consiste à injecter de l'eau pulvérisée dans le perméat très sec issu du module membranaire (ou bien d'un des modules membranaires quand on effectue une opération de séparation sur un multiétages de séparateurs), donnant lieu à l'évaporation de tout ou partie de cette eau dans le perméat considéré (du fait de la marge existante par rapport au point de saturation), cette évaporation, endothermique, "pompant" une partie de l'énergie du perméat, ce qui entraîne un abaissement de la température de ce perméat. Ce flux perméat ainsi refroidi est alors envoyé vers un échangeur de gaz comprenant au moins deux voies, où il échange ses frigories avec le mélange gazeux à refroidir (qu'il s'agisse du mélange entrant à séparer dans un monoétage ou multiétages de séparation, ou du mélange résiduaire issu d'une des étapes de séparation, avant qu'il n'atteigne le séparateur suivant de l'installation multiétagée).

Un tel mode de refroidissement par injection d'eau pulvérisée, s'il a déjà été évoqué pour le refroidissement d'un air comprimé en sortie de compresseur (comme décrit dans le document EP-A-524435) représente ici une coopération tout à fait attractive et performante entre le phénomène d'évaporation d'eau, consommateur d'énergie, et la technique de séparation membranaire produisant (en particulier dans un multi-étages de séparation), un ou des perméats offrant une marge de manoeuvre importante avant d'atteindre la saturation en eau.

Cette solution apporte d'autre part un coût de fonctionnement et d'investissement incomparablement plus faible que celui des méthodes citées plus haut et traditionnellement utilisées dans le milieu de la séparation membranaire, l'eau représentant une source de "froid" comparativement presque gratuite.

Un objectif de la présente invention est donc de proposer un procédé amélioré de séparation membranaire d'un gaz, d'un milieu gazeux entrant.

Le procédé de séparation membranaire d'au moins un gaz d'un mélange gazeux entrant, par passage dans un ensemble constitué d'un ou de plusieurs séparateurs membranaires disposés en série, chaque séparateur produisant en sa sortie perméat un mélange enrichi en les composants les plus perméables du mélange gazeux entrant et en sa sortie résiduaire un mélange enrichi en les composants les moins perméables du mélange gazeux entrant, tout ou partie du mélange résiduaire produit par un séparateur situé en amont du dernier séparateur de la série étant envoyé dans le séparateur le suivant dans la série,
se caractérise en ce que au moins l'un des mélanges gazeux du groupe constitué du mélange entrant dans l'ensemble et des mélanges gazeux résiduaires produits en amont du dernier séparateur de la série, est refroidi par passage dans une première voie d'un échangeur à au moins deux voies, on fait transiter dans une seconde voie de l'échangeur le mélange obtenu en sortie perméat d'au moins un des séparateurs, mélange perméat au sein duquel on aura, avant son arrivée dans l'échangeur, injecté de l'eau pulvérisée.

Comme on l'aura compris à la lecture de ce qui précède, selon une des mises en oeuvre de l'invention, l'opération de séparation est effectuée sur un monoétage de séparation, l'ensemble ne comprend donc qu'un seul séparateur. On fait alors transiter le mélange entrant par l'une des voies de l'échangeur et le mélange perméat produit par le séparateur dans une autre voie de l'échangeur, mélange perméat au sein duquel on aura, avant son arrivée dans l'échangeur, injecté de l'eau pulvérisée.

Selon une autre des mises en oeuvre de l'invention, l'opération de séparation est effectuée sur un multiétages de séparation, l'ensemble comprend alors au moins deux séparateurs membranaires en série, et l'on fait passer tout ou partie du mélange résiduaire issu d'un séparateur membranaire dans le séparateur le suivant dans la série. On fait alors passer dans l'une des voies de l'échangeur le mélange entrant dans l'ensemble ou bien l'un des résiduaires transitant entre deux séparateurs, et dans une autre voie de l'échangeur, le mélange perméat produit par au moins l'un des séparateurs, mélange perméat au sein duquel on aura, avant son arrivée dans l'échangeur, injecté de l'eau pulvérisée..

Selon une des mises en oeuvre de l'invention, l'ensemble comporte deux séparateurs membranaires, le premier séparateur membranaire fonctionnant à une première température de fonctionnement et le second séparateur membranaire fonctionnant à une seconde température de fonctionnement, la première température de fonctionnement étant supérieure d'au moins 20°C à la seconde température de fonctionnement, préférentiellement supérieure d'au moins 40°C.

Selon les cas, les circulations de gaz dans l'échangeur pourront s'effectuer à contre-courant ou bien à co-courant.

Comme signalé précédemment, le procédé de séparation membranaire selon l'invention pourra être utilisé pour de nombreux cas de mélanges entrants, selon l'objectif recherché, qu'il s'agisse par exemple d'un mélange entrant d'air en vue de la production d'azote comportant une concentration résiduelle d'oxygène, ou encore de la séparation de l'hydrogène ou du CO de certains milieux gazeux entrant en provenance de certaines industries telles que les raffineries.

Selon une des mises en oeuvre avantageuse de l'invention, le mélange perméat (ou le mélange des perméats) qui circule dans la seconde voie de l'échangeur y circule verticalement du bas vers le haut.

Dans ce cas, la circulation du gaz à refroidir (mélange entrant ou mélange résiduaire) dans la première voie de l'échangeur se fait préférentiellement à contre courant, donc de haut en bas.

Par ailleurs, il est possible et avantageux d'asservir le débit d'injection d'eau dans le mélange perméat à la température du mélange gazeux à refroidir en sortie d'échangeur.

L'invention concerne également une installation de séparation membranaire de gaz, convenant pour la mise en oeuvre du procédé précédemment décrit, comprenant :
a) une source de gaz entrant reliée à un ensemble de séparation comportant un ou plusieurs séparateurs membranaires disposés en série;
b) un échangeur à au moins deux voies;
c) une première (5,12) ligne de gaz reliant l'entrée d'une des voies de l'échangeur (8,13) et le passage d'au moins l'un des mélanges gazeux du groupe constitué par le mélange entrant et les mélanges résiduaires ;
d) une deuxième ligne (6,17 ;21) de gaz reliant la sortie perméat d'au moins l'un des séparateurs à l'entrée d'une autre des voies de l'échangeur; et,
e) des moyens (10, 18) d'injection d'eau pulvérisée dans la deuxième ligne de gaz.

Selon une des mises en oeuvre avantageuse de l'invention, la voie de l'échangeur à l'entrée de laquelle est reliée la ligne de gaz est verticale, la ligne de gaz étant reliée au point bas de la voie.

Par "séparateur membranaire", on entend selon l'invention, une membrane ou module membranaire semi-perméable, le cas échéant un ensemble de plusieurs membranes (ou modules membranaires) semi-perméables montées en parallèle, présentant de bonne propriétés de séparation du gaz que l'on souhaite extraire par rapport au mélange entrant dans le séparateur.

Ainsi, à titre d'exemple, on pourra utiliser pour ses propriétés de séparation de l'oxygène d'un mélange entrant d'air une membrane de type polyimide, et pour ses propriétés de séparation de l'hydrogène d'un mélange entrant issu d'une raffinerie une membrane de type polyaramide.

On entend par "température de fonctionnement" selon l'invention, la notion rappelée plus haut dans la présente demande.

Comme il apparaîtra clairement à l'homme du métier, dans tous les cas déjà cités, le mélange entrant, avant son arrivée sur le premier étage de séparation, subit une opération classique pour ce domaine de la séparation membranaire, de conditionnement, permettant de réaliser des opérations telles que déshuilage, filtrage, séchage ou encore mise en température éventuelle du mélange.

D'autres caractéristiques et avantages de la présente invention ressortiront de la description suivante de modes de réalisation donnés à titre illustratif mais nullement limitatif, faite en relation avec les dessins annexés, sur lesquels :
- La figure 1 est une représentation schématique d'une installation bi-étagée convenant pour la mise en oeuvre du procédé selon l'invention, en vue d'obtenir à partir d'un mélange entrant d'air, un azote de haute pureté.
- La figure 2 est une représentation schématique d'une installation mono-étagée convenant pour la mise en oeuvre du procédé selon l'invention.
- La figure 3 est une représentation plus détaillée d'une autre installation mono-étagée convenant pour la mise en oeuvre du procédé selon l'invention, présentant une géométrie d'échangeur à circulation verticale.

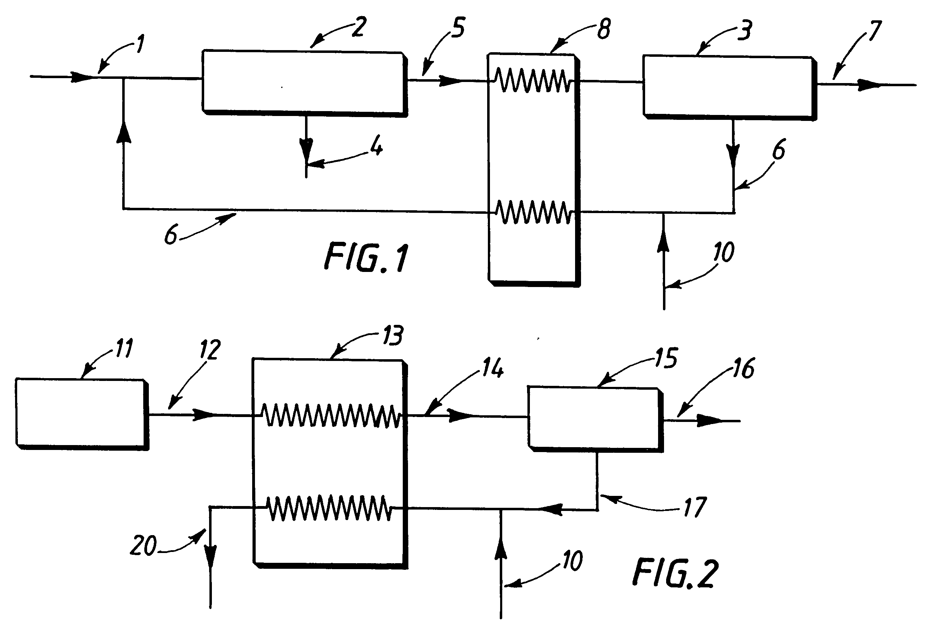

On reconnaît sur la figure 1 la présence d'un premier séparateur membranaire 2, alimenté par un mélange entrant 1, le compresseur d'air et l'étape de conditionnement éventuelle (comprenant des étapes telles que séchage, filtrage, déshuilage ou encore mise en température éventuelle du gaz) du mélange 1 avant son arrivée sur le séparateur 2 n'ont pas été représentés.

Le séparateur 2 donne lieu à la production côté perméat d'un mélange gazeux 4, et côté résiduaire d'un mélange gazeux 5, dirigé, dans le cas représenté, dans sa totalité vers l'entrée du second séparateur 3, qui à son tour donne lieu à la production côté perméat d'un mélange gazeux 6, et côté résiduaire d'un mélange gazeux 7.

La figure 1 illustre le cas d'une installation convenant pour la mise en oeuvre du procédé selon l'invention, dans le cas où l'on cherche à produire un mélange gazeux 7 de haute pureté en azote, à partir d'un mélange entrant 1 qui est de l'air. Les deux séparateurs 2 et 3, sont alors, pour l'exemple représenté, de même type, par exemple de type polyimide, la température de fonctionnement du séparateur 2 étant par exemple largement supérieure à celle du second séparateur 3.

Le mélange gazeux 6 obtenu coté perméat du second séparateur (donc ici enrichi en oxygène) est recyclé vers l'entrée du séparateur 2, préférentiellement en amont du compresseur d'air, en transitant par l'une des voies d'un échangeur 8.

Avant son arrivée dans l'échangeur, de l'eau pulvérisée 10 est injectée dans le perméat 6. Cette eau injectée dans le perméat très sec issu du séparateur 3 va alors s'évaporer, en tout ou partie (l'évaporation pouvant le cas échéant se poursuivre dans l'échangeur), donnant lieu au refroidissement du perméat 6, qui échange alors ses frigories dans l'échangeur 8 avec le mélange résiduaire 5 (riche en azote) qui circule dans une autre voie de l'échangeur.

La figure 2 illustre le cas d'un monoétage de séparation membranaire 15, où arrive par exemple de l'air 12 en provenance d'un ensemble 11 (de compression et de conditionnement) après avoir transité par un échangeur à deux voies, l'autre voie étant réservée au mélange perméat 17, refroidi par une injection d'eau 10, qui libère alors ses frigories dans l'échangeur 13 avant d'être rejeté vers l'extérieur ou encore utilisé dans un poste utilisateur nécessitant un mélange suroxygéné.

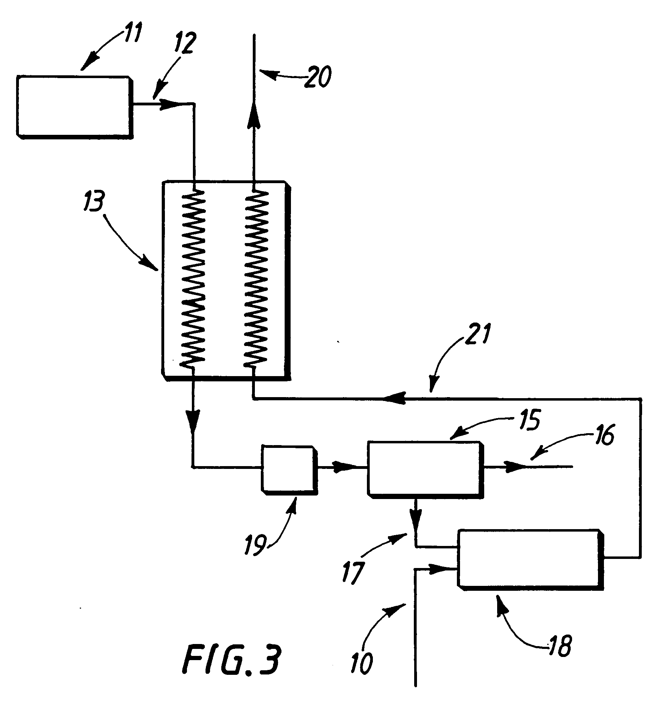

La figure 3 fournie une illustration plus détaillée d'une autre installation mono-étagée convenant pour la mise en oeuvre du procédé selon l'invention, présentant une géométrie d'échangeur à circulation verticale.

Le mélange entrant conditionné 12, en provenance de l'ensemble 11, transite par une première voie de l'échangeur 13, l'autre voie de l'échangeur étant réservée au mélange perméat 17, qui a été refroidi par une injection d'eau pulvérisée 10. L'injection d'eau s'est effectuée sur la ligne 17/21, reliant la sortie perméat du séparateur 15 à l'entrée de la seconde voie de l'échangeur, au niveau d'un tube élargi 18 que l'on peut qualifier de "capacité".

Le mélange perméat ainsi refroidi atteint la seconde voie de l'échangeur ou il libère ses frigories puis ressort par la portion de ligne 20, pour être rejeté vers l'extérieur où encore utilisé dans un poste utilisateur nécessitant un mélange suroxygéné.

Comme signalé précédemment, l'eau injectée dans le perméat très sec issu du séparateur 15 va alors s'y évaporer, en tout ou partie, l'évaporation pouvant le cas échéant se poursuivre dans l'échangeur 13.

Sur le mode de réalisation représenté, le mélange entrant obtenu en sortie d'échangeur est, avant d'atteindre le séparateur 15, prétraité dans une unité de filtration d'eau (par exemple du type filtre à coalescence) et de chauffage. On notera que cette dernière étape de chauffage pourra par exemple s'effectuer par échange thermique avec le mélange entrant "chaud" 12.

La figure 3 illustre un mode de réalisation avantageux de l'invention où l'échange thermique dans l'échangeur 13 entre le mélange entrant 12 et le mélange perméat 17 s'effectue à contre-courant selon une géométrie verticale, le mélange perméat circulant dans l'échangeur de bas en haut.

Une installation telle que celle décrite en relation avec la figure 3 a été utilisée pour refroidir un débit (12) d'air d'environ 151 Nm³/h à environ 23°C, avant séparation membranaire sur un séparateur 15 comportant 5 modules de type polyimide (offrant ainsi une surface de séparation de l'ordre de 130 m² par module), en vu de l'obtention d'un débit résiduaire d'environ 44 Nm³/h d'azote à 0,5 % d'oxygène résiduel.

L'échangeur utilisé est un échangeur à plaques offrant une surface d'échange voisine de 2 m².

L'injection d'eau pulvérisée 10 au niveau de la capacité 18 s'effectue à l'aide d'une buse pneumatique (avec un débit de l'ordre de 4 l/h d'eau injectée).

Les caractéristiques des mélanges obtenus aux différentes étapes de cet exemple de mise en oeuvre sont alors les suivantes :

### Air entrant 12 :

- débit: ≈ 151 Nm³/h
- température : ≈ 40 °C
- pression : ≈ 12,2 bar absolus
- humidité relative : 100 %

### Air entrant en sortie d'échangeur 13 :

- température : ≈ 19°C
- pression : ≈ 12,1 bar absolus
- humidité relative : 100 %

### Air entrant en sortie du système 19 de filtration/chauffage :

- température : ≈ 23 °C
- pression : ≈ 11,9 bar absolus
- humidité relative : <80 %

### Mélange perméat 17 obtenu en sortie perméat :

- débit : ≈ 108 Nm³/h
- température: ≈ 23 °C
- pression : ≈ 1,05 bar absolus
- humidité relative : <10 %

### Mélange perméat en sortie de capacité 18 :

- température : ≈ 10 °C
- humidité relative : 100 % + gouttelettes d'eau

### Mélange perméat en sortie 20 d'échangeur :

- température : ≈ 26,5 °C
- pression : ≈ 1 bar absolus
- humidité relative : ≈ 51,5 %

Cet exemple de mise en oeuvre illustre le fait que l'on obtient selon l'invention un refroidissement performant et fiable du mélange entrant d'air 12, avant sa séparation membranaire, l'objectif de consigne en température étant très précisément atteint, en utilisant pour cela toutes les potentialités du système.

En comparaison des moyens de refroidissement classiquement utilisés dans le domaine de la séparation membranaire, le procédé selon l'invention offre un bilan économique et une simplicité et souplesse d'utilisation tout à fait positifs (l'apport d'eau utilisé étant très faible), sans utilisation complexe de tours sous pression ou autres moyens de pompages (tels qu'utilisés dans le document US-A-5,306,331 déjà évoqué), offrant de ce fait des performances en termes d'investissement et de fiabilité particulièrement attractives.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art dans le cadre des revendications ci-après.

## Revendications

1. Procédé de séparation membranaire d'au moins un gaz d'un mélange gazeux entrant (1, 12), par passage dans un ensemble constitué d'un ou de plusieurs séparateurs membranaires disposés en série (15, 2, 3), chaque séparateur produisant en sa sortie perméat un mélange (17, 4, 6) enrichi en les composants les plus perméables du mélange gazeux entrant et en sa sortie résiduaire un mélange (16, 5, 7) enrichi en les composants les moins perméables du mélange gazeux entrant, tout ou partie du mélange résiduaire produit par un séparateur situé en amont du dernier séparateur de la série étant envoyé dans le séparateur le suivant dans la série,
caractérisé en ce que l'on refroidit au moins l'un (5, 12) des mélanges gazeux du groupe constitué du dit mélange entrant et des dits mélanges résiduaires produits en amont du dernier séparateur, par passage dans une première voie d'un échangeur (8) à au moins deux voies, on fait transiter dans une seconde voie de l'échangeur le mélange (17, 6) obtenu en sortie perméat d'au moins un des dits séparateurs, mélange perméat (17, 6) au sein duquel on aura, avant son arrivée dans le dit échangeur, injecté de l'eau (10) pulvérisée.

2. Procédé selon la revendication 1, caractérisé en ce que le dit ensemble comprend deux séparateurs membranaires en série, et on fait fonctionner le premier séparateur membranaire à une première température de fonctionnement et le second séparateur membranaire à une seconde température de fonctionnement, la première température étant supérieure d'au moins 20°C à la seconde température, préférentiellement supérieure d'au moins 40°C.

3. Procédé selon l'une des revendications 1 ou 2, caractérisé en ce que l'on fait circuler le dit mélange perméat dans ladite seconde voie de l'échangeur verticalement de bas en haut.

4. Procédé selon la revendication 3, caractérisé en ce que la circulation dans la première voie de l'échangeur du mélange gazeux à refroidir se fait à contre courant de haut en bas.

5. Procédé selon l'une des revendications 1 à 4, caractérisé en ce que l'on asservit le débit d'eau injecté dans le dit mélange perméat à la température du mélange gazeux à refroidir tel qu'obtenu en sortie de la première voie de l'échangeur.

6. Procédé selon l'une des revendications 1 à 5, caractérisé en ce que ledit mélange entrant est de l'air.

7. Installation de séparation membranaire de gaz , convenant pour la mise en oeuvre du procédé selon l'une des revendications 1 à 6, comprenant:
a) une source de gaz entrant reliée à un ensemble de séparation comportant un ou plusieurs séparateurs membranaires disposés en série ;
b) un échangeur à au moins deux voies (8,13);
c) une première (5,12) ligne de gaz reliant l'entrée d'une des Voies de l'échangeur (8,13) et le passage d'au moins l'un des mélanges gazeux du groupe constitué par le mélange entrant et les mélanges résiduaires ;
d) une deuxième ligne (6,17 ;21) de gaz reliant la sortie perméat d'au moins l'un des séparateurs à l'entrée d'une autre des voies de l'échangeur; et,
e) des moyens (10, 18) d'injection d'eau pulvérisée dans la deuxième ligne de gaz.

8. Installation selon la revendication 7, caractérisée en ce que ladite voie à l'entrée de laquelle est reliée la deuxième ligne de gaz est verticale, la deuxième ligne de gaz étant reliée au point bas de la voie.

## Claims

1. Process for membrane separation of at least one gas in an intake gas mixture (1, 12), by passing it through an assembly consisting of one or more membrane separators which are arranged in series (15, 2, 3), each separator producing, at its permeate output, a mixture (17, 4, 6) enriched with the most permeable components of the intake gas mixture and, at its residue output, a mixture (16, 5, 7) enriched with the least permeable components of the intake gas mixture, some or all of the residual mixture produced by a separator located upstream of the last separator in the series being sent to the separator following it in the series,
characterized in that at least one (5, 12) of the gas mixtures of the group consisting of the said intake mixture and the said residual mixtures produced upstream of the last separator, is cooled by passing it through a first channel of an exchanger (8) having at least two channels, the mixture (17, 4, 6) obtained at the permeate output of at least one of the said separators being passed through a second channel of the exchanger, into which permeate mixture (17, 6) sprayed water (10) will have been injected before it reaches the said exchanger.

2. Process according to Claim 1, characterized in that the said assembly comprises two membrane separators in series, and the first membrane separator is operated at a first operating temperature and the second membrane separator at a second operating temperature, the first temperature being at least 20°C higher than the second temperature, preferably at least 40°C higher.

3. Process according to one of Claims 1 and 2, characterized in that the said permeate mixture is circulated vertically upwards through the said second channel of the exchanger.

4. Process according to Claim 3, characterized in that the gas mixture to be cooled is circulated through the first channel of the exchanger downwards in countercurrent.

5. Process according to one of Claims 1 to 4, characterized in that the flow rate of water injected into the said permeate mixture is slaved to the temperature of the gas mixture to be cooled as obtained at the output of the first channel of the exchanger.

6. Process according to one of Claims 1 to 5, characterized in that the said intake mixture is air.

7. Gas membrane separator plant, suitable for implementing the process according to one of Claims 1 to 6, comprising:
a) an intake gas source connected to a separation assembly including one or more membrane separators which are arranged in series;
b) an exchanger having at least two channels (8, 13);
c) a first (5, 12) gas line connecting the input of one of the channels of the exchanger (8, 13) and the passage for at least one of the gas mixtures in the group consisting of the input mixture and the residual mixtures;
d) a second line (6, 17; 21) connecting the permeate output of at least one of the separators to the input of another of the channels of the exchanger; and
e) means (10, 18) for injecting sprayed water into the second gas line.

8. Plant according to Claim 7, characterized in that the said channel to whose input the second gas line is connected is vertical, the second gas line being connected to the bottom point of the channel.

## Patentansprüche

1. Verfahren zur Abtrennung von mindestens einem Gas aus einem eintretetenden Gasgemisch (1, 12) durch Hindurchleiten durch eine Einheit aus einem oder mehreren, in Reihe angeordneten Membranseparatoren (15, 2, 3), wobei jeder Separator am Permeatausgang ein mit den permeableren Bestandteilen des eintretenden Gasgemischs angereichertes Gemisch (17, 4, 6) und am Restausgang ein mit den weniger permeablen Bestandteilen des eintretenden Gasgemischs angereichertes Gemisch (16, 5, 7) erzeugt, wobei das von einem vor dem letzten Separator der Reihe angeordneten Separator erzeugte Restgemisch ganz oder teilweise dem folgenden Separator in der Reihe zugeführt wird,
dadurch gekennzeichnet, daß man mindestens eines (5, 12) der Gasgemische aus der Gruppe bestehend aus dem eintretenden Gasgemisch und den vor dem letzten Separator erzeugten Restgemischen durch Hindurchleiten durch einen ersten Kanal eines Austauschers (8) mit mindestens zwei Kanälen abkühlt, das am Permeatausgang mindestens eines der Separatoren erhaltene Gemisch (17, 6) durch einen zweiten Kanal des Austauschers hindurchleitet und in das Permeatgemisch (17, 6) vor dessen Eintritt in den Austauscher zerstäubtes Wasser (10) einspritzt.

2. Verfahren nach Anspruch 1, dadurch gekennzeichnet, daß man eine Einheit mit zwei in Reihe angeordneten Membranseparatoren verwendet und den ersten Membranseparator bei einer ersten Betriebstemperatur und den zweiten Membranseparator bei einer zweiten Betriebstemperatur betreibt, wobei die erste Temperatur mindestens 20°C, vorzugsweise mindestens 40°C, über der zweiten Temperatur liegt.

3. Verfahren nach Anspruch 1 oder 2, dadurch gekennzeichnet, daß man das Permeatgemisch im zweiten Kanal des Austauschers vertikal von unten nach oben strömen läßt.

4. Verfahren nach Anspruch 3, dadurch gekennzeichnet, daß man das abzukühlende Gasgemisch im ersten Kanal des Austauschers im Gegenstrom von oben nach unten strömen läßt.

5. Verfahren nach einem der Ansprüche 1 bis 4, dadurch gekennzeichnet, daß man den Durchsatz des in das Permeatgemisch eingespritzten Wassers auf die Temperatur des abzukühlenden Gasgemischs, wie es am Ausgang des ersten Kanals des Austauschers anfällt, abstimmt.

6. Verfahren nach einem der Ansprüche 1 bis 5, dadurch gekennzeichnet, daß man als eintretendes Gemisch Luft einsetzt.

7. Anlage zur Membrantrennung von Gas zur Durchführung des Verfahrens nach einem der Ansprüche 1 bis 6, enthaltend:
a) eine Quelle eintretenden Gases, die mit einer Trenneinheit mit einem oder mehreren, in Reihe angeordneten Membranseparatoren verbunden ist;
b) einen Austauscher mit mindestens zwei Kanälen (8, 13);
c) einer ersten Gasleitung (5, 12), die den Eingang eines der Kanäle des Austauschers (8, 13) und den Durchgang für mindestens eines der Gasgemische aus der Gruppe bestehend aus dem eintretenden Gemisch und den Restgemischen miteinander verbindet;
d) einer zweiten Gasleitung (6, 17, 21), die den Permeatausgang mindestens eines der Separatoren mit dem Eintritt eines anderen der Kanäle des Austauschers verbindet; und
e) Einrichtungen (10, 18) zum Einspritzen von zerstäubtem Wasser in die zweite Gasleitung.

8. Anlage nach Anspruch 7, dadurch gekennzeichnet, daß der Kanal, dessen Eingang mit der zweiten Gasleitung verbunden ist, vertikal ist, wobei die zweite Gasleitung mit dem unteren Ende des Kanals verbunden ist.
